# EUROPEAN PATENT SPECIFICATION

(11) **EP 3 515 706 B1**
(45) Date of publication and mention of the grant of the patent: **24.11.2021**
(21) Application number: 17784423.0
(22) Date of filing: 06.09.2017
(51) Int. Cl.: C08J 7/04, C08J 7/046, B32B 17/10, G02B 1/10, G02B 5/20, G02B 5/22, C08J 7/043

(54) **ELECTROMAGNETIC ENERGY-ABSORBING OPTICAL PRODUCT AND METHOD FOR MAKING**
ELEKTROMAGNETISCHES ENERGIEABSORBIERENDES OPTISCHES PRODUKT UND VERFAHREN ZUR HERSTELLUNG
PRODUIT OPTIQUE ABSORBANT L'ÉNERGIE ÉLECTROMAGNÉTIQUE ET PROCÉDÉ DE FABRICATION ASSOCIÉ

(30) Priority: 23.09.2016 US 201615274348
(43) Date of publication of application: 31.07.2019
(73) Proprietor: Eastman Chemical Company, Kingsport, TN 37660 (US)
(72) Inventor: NAND, Brija, Hayward CA 94544 (US); BOMAN, Lee, Campbell, Belmont CA 94002 (US); KROGMAN, Kevin, C., Los Gatos CA 95032 (US); HAWKINS, Michael, Martinsville VA 24112 (US); PORT, Anthony, Brian, Salem, Oregon 97306-1818 (US); GERASIMOV, Timofey, Prospect Kentucky 40059-8208 (US); SCHULTZ, Ralph, Peter, Martinsville VA 24112 (US)
(74) Representative: Ricker, Mathias
(86) International application number: PCT/US2017/050170
(87) International publication number: WO 2018/057286

(56) References cited:
- WO-A1-2013/070473
- WO-A1-2014/099367
- US-A1- 2016 170 104
- US-A1- 2016 231 480
- US-A1- 2016 231 481

## Description

### FIELD OF THE INVENTION

The present invention broadly relates to optical products for use in automotive applications and methods for their manufacture. More particularly, the present invention relates to an electromagnetic energy-absorbing window film or an electromagnetic energy-absorbing composite for coloring an opaque article by application thereto, for example a car wrap, that includes a composite coating including a first layer that includes a polyionic binder and a second layer that includes an electromagnetic energy-absorbing insoluble particle, wherein said first layer and second layer each include a binding group component which together form a complimentary binding group pair.

### BACKGROUND OF THE INVENTION

Color has typically been imparted to optical products such as automotive and architectural window films by use of organic dyes. More particularly, the current commercial practice for producing dyed film from polyester involves swelling of the molecular structure of the substrate in baths of hot organic solvent such as ethylene glycol during the dyeing process, as swelled polyester (particularly PET) films are capable of absorbing organic dyes. These films and their manufacturing process suffer many drawbacks. Firstly, the substrates require exposure to organic solvents and elevated temperatures, which present both mechanical and chemical challenges such as environmental hazards and costs associated with storing the raw solvents and disposing of the resulting waste. Further, swelled substrates require special handling to avoid downstream stretching thereby decreasing the production yield. Next, the polyester elevated process temperatures and residual solvents in the substrate film after drying constrain downstream use and processing of substrates which in turn limits the potential end-use applications for such dyed films. On the process side, the existing methodology uses large volume dye baths which makes rapid color change within commercial manufacturing difficult. Finally, only a limited number of organic dyes are soluble and stable in the hot solvent swelling media and many of those are often subject to degradation by high energy radiation (sub 400 nm wavelength) to which the substrate is subjected when used in window film applications, thereby shortening the useful lifetime of the product.

To address these drawbacks, some film manufacturers have transitioned to using a pigmented layer on the surface of a base polymeric film for tinting a polymeric film. For example, U.S. Published Application number 2005/0019550A1 describes color-stable, pigmented optical bodies comprising a single or multiple layer core having at least one layer of an oriented thermoplastic polymer material wherein the oriented thermoplastic polymer material has dispersed within it a particulate pigment. As noted in this published application, these products can suffer a myriad of processing and performance drawbacks. For example, layers of this type are typically applied as thin films and can employ a relatively high pigment concentration to achieve a desired tint level, particularly in automotive window films with a relatively high desired level of darkening such as those with an electromagnetic energy transmittance in the visible region (or Tᵥᵢₛ) of less than 50%. These high pigment concentrations are difficult to uniformly disperse within the thin layer. More generally, pigmented layers can suffer from greater haze and reduced clarity even in applications (for example architectural window films) with a relatively moderate, low and even minimal levels of desired darkening.

Color also has previously imparted to optical products such as composites for coloring opaque articles (such as automotive panels, for example) by application thereto, as described in U.S. Patent No. 5,030,513. Such composites are sometimes referred to in the art as paint composites or when applied to cars or automotive panels, car wraps. In order to achieve desired color saturation, however, typical thickness of the color containing layer is reported to be from about 0.1 to 3 mils (approximately 2,500nm to 76,000nm) at pigment concentrations of up to 80%. In addition to difficulty in achieving uniform dispersion as mentioned above, these generally thicker and high-solids pigmented coatings can suffer from surface uniformity problems known in art as orange peel or surface mottling. While surfactants, flow control agents and other similar additives may be used to minimize these issues, they are often unable to achieve the level of uniformity as required by modern day optical products. Thick solvent-borne as well as water-borne coatings also require significant amount of energy to be applied to the substrate in order to dry or cure, making them less attractive from the environmental point of view.

A continuing need therefore exists in the art for an optical product that meets all the haze, clarity, surface uniformity, UV-stability and product longevity demands of current commercial window films as well automotive window and vehicle coloring and/or protection films, while also being capable of manufacture by an environmentally friendly, aqueous-based coloring process performed preferably at ambient temperatures and pressures.

US 2016/231481 A1, US 2016/231480 A1, US 2016/170104 A1, WO 2017/095469 A1 and WO 2017/095468 A1 disclose an electromagnetic energy-absorbing optical product useful particularly for automotive and architectural window films, respectively. The electromagnetic energy-absorbing optical product includes a polymeric substrate and a composite coating with the composite coating including first and second layers each containing a binding group component which together form a complimentary binding group pair. WO 2014/099367 A1 discloses methods of making a multilayer optical film. WO 2013/070473 A1 provides methods and materials for preparing bridging films.

### SUMMARY OF THE INVENTION

The present invention relates to the use of an electromagnetic energy-absorbing optical product for coloring an opaque article as defined in claim 1, and to a method for coloring an opaque article as defined in claim 2. Preferred embodiments are disclosed in dependent claims 3 to 11.

### BRIEF DESCRIPTION OF THE DRAWINGS

The invention will be described in further detail below and with reference to the accompanying drawings, wherein like reference numerals throughout the figures denote like elements and in wherein
Figure 1 is a schematic cross-section of an embodiment of the electromagnetic energy-absorbing optical product of the present disclosure;
Figure 2 is a schematic cross-section of an embodiment of the electromagnetic energy-absorbing optical product of the present disclosure that includes a plurality of composite coatings;
Figure 3 is a graph depicting electromagnetic transmittance data generated from analysis of the electromagnetic energy-absorbing optical products produced in Example 2;
Figure 4 is a graph depicting electromagnetic absorption data generated from analysis of the electromagnetic energy-absorbing optical products produced in Example 4;
Figure 5 is a graph depicting electromagnetic absorption data generated from analysis of the electromagnetic energy-absorbing optical products produced in Examples 4 and 5;
Figure 6 is a graph depicting electromagnetic absorption data generated from analysis of the electromagnetic energy-absorbing optical products produced in Examples 4 and 6;
Figure 7 is a graph depicting electromagnetic absorption data generated from analysis of the electromagnetic energy-absorbing optical products produced in Examples 4 and 7.and
Figure 8 is a graph depicting electromagnetic absorption data generated from analysis of electromagnetic energy-absorbing optical products produced in Examples 2, 4 and 8.
Figure 9 is a graph depicting electromagnetic absorption data generated from analysis of electromagnetic energy-absorbing optical products produced in Examples 9 and 10.

### DETAILED DESCRIPTION

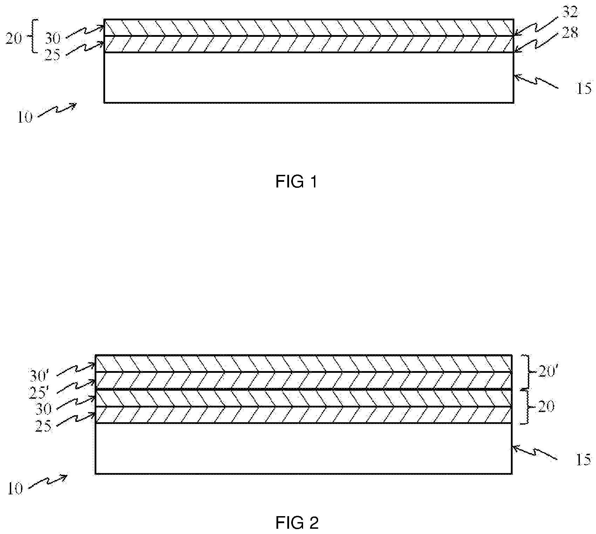

As shown in FIG. 1 and 2, an electromagnetic energy-absorbing optical product 10 comprising a polymeric substrate 15 and a composite coating 20 is disclosed. The composite coating includes a first layer 25 and a second layer 30. Preferably first layer 25 is immediately adjacent to said polymeric substrate 20 at its first face 28 and second layer 30 is immediately adjacent to first layer 25 at its opposite face 32. This first layer 25 includes a polyionic binder while the second layer 30 includes an electromagnetic energy-absorbing insoluble particle. Each layer 25 and 30 includes a binding group component with the binding group component of the first layer and the binding group component of the second layer constituting a complimentary binding group pair. As used herein, the phrase "complimentary binding group pair" means that binding interactions, such as electrostatic binding, hydrogen bonding, Van der Waals interactions, hydrophobic interactions, and/or chemically induced covalent bonds are present between the binding group component of the first layer and the binding group component of the second layer of the composite coating. A "binding group component" is a chemical functionality that, in concert with a complimentary binding group component, establishes one or more of the binding interactions described above. The components are complimentary in the sense that binding interactions are created through their respective charges.

The first layer 25 of the composite coating includes a polyionic binder, which is defined as a macromolecule containing a plurality of either positive or negative charged moieties along the polymer backbone. Polyionic binders with positive charges are known as polycationic binders while those with negative charges are termed polyanionic binders. Also, it will be understood by one of ordinary skill that some polyionic binders can function as either a polycationic binder or a polyanionic binder depending on factors such as pH and are known as amphoteric. The charged moieties of the polyionic binder constitute the "binding group component" of the first layer.

Suitable polycationic binder examples include poly(allylamine hydrochloride), linear or branched poly(ethyleneimine), poly(diallyldimethylammonium chloride), macromolecules termed polyquaterniums or polyquats and various copolymers thereof. Blends of polycationic binders are also contemplated by the present invention. Suitable polyanionic binder examples include carboxylic acid containing compounds such as poly(acrylic acid) and poly(methacrylic acid), as well as sulfonate containing compounds such as poly(styrene sulfonate)and various copolymers thereof. Blends of polyanionic binders are also contemplated by the present invention. Polyionic binders of both polycationic and polyanionic types are generally well known to those of ordinary skill in the art and are described for example in U.S. Published Patent Application number US20140079884 to Krogman et al. Examples of suitable polyanionic binders include polyacrylic acid (PAA), poly(styrene sulfonate) (PSS), poly(vinyl alcohol) or poly(vinylacetate) (PVA, PVAc), poly(vinyl sulfonic acid), carboxymethyl cellulose (CMC), polysilicic acid, poly(3,4-ethylenedioxythiophene) (PEDOT) and combinations thereof with other polymers (e.g. PEDOT:PSS), polysaccharides and copolymers of the above mentioned. Other examples of suitable polyanionic binders include trimethoxysilane functionalized PAA or PAH or biological molecules such as DNA, RNA or proteins. Examples of suitable polycationic binders include poly(diallyldimethylammonium chloride) (PDAC), Chitosan, poly(allyl amine hydrochloride) (PAH),polysaccharides, proteins, linear poly(ethyleneimine) (LPEI), branched poly(ethyleneimine) BPEI and copolymers of the above-mentioned, and the like. Examples of polyionic binders that can function as either polyanionic binders or polycationic binders include amphoteric polymers such as proteins and copolymers of the above mentioned polycationic and polyanionic binders.

The concentration of the polyionic binder in the first layer may be selected based in part on the molecular weight of its charged repeat unit but will typically be between 0.1 mM - 100 mM, more preferably between 0.5 mM and 50mM and most preferably between 1 and 20 mM based on the molecular weight of the charged repeat unit comprising the first layer. Preferably the polyionic binder is a polycationic binder and more preferably the polycationic binder is polyallylamine hydrochloride. Most preferably the polyionic binder is soluble in water and the composition used to form the first layer is an aqueous solution of polyionic binder. In an embodiment wherein the polyionic binder is a polycation and the first layer is formed from an aqueous solution, the pH of the aqueous solution is selected so that from 5 to 95%, preferably 25 to 75% and more preferably approximately half of the ionizable groups are protonated. Other optional ingredients in the first layer include biocides or shelf-life stabilizers.

The second layer 30 of the composite coating 20 includes an electromagnetic energy-absorbing insoluble particle. The phrase "electromagnetic energy-absorbing" means that the particle is purposefully selected as a component for the optical product for its preferential absorption at particular spectral wavelength(s) or wavelength ranges(s). The term "insoluble" is meant to reflect the fact that the particle does not substantially dissolve in the composition used to form the second layer 30 and exists as a particle in the optical product structure. The electromagnetic energy-absorbing insoluble particle is preferably a visible electromagnetic energy absorber, such as a pigment; however, insoluble particles such as UV absorbers or IR absorbers, or absorbers in various parts of the electromagnetic spectrum that do not necessarily exhibit color are also within the scope of the present invention. The electromagnetic energy-absorbing particle is preferably present in the second layer in an amount of from 30% to 60% by weight based on the total weight of the second layer. In order to achieve the desired final electromagnetic energy absorption level, the second layer should be formed from a composition that includes the insoluble electromagnetic energy-absorbing particle in the amount of 0.25 to 2 weight percent based on the total weight of the composition.

Pigments suitable for use as the electromagnetic energy-absorbing insoluble particle in a preferred embodiment of the second layer are preferably particulate pigments with an average particle diameter of between 5 and 300 nanometers, more preferably between 10 and 50 nanometers, often referred to in the art as nanoparticle pigments. Even more preferably, the surface of the pigment includes the binding group component of the second layer. Suitable pigments are available commercially as colloidally stable water dispersions from manufacturers such as Cabot, Clariant, DuPont, Dainippon and DeGussa. Particularly suitable pigments include those available from Cabot Corporation under the Cab-O-Jet® name, for example 250C (cyan), 265M (magenta), 270Y (yellow) or 352K (black). In order to be stable in water as a colloidal dispersion, the pigment particle surface is typically treated to impart ionizable character thereto and thereby provide the pigment with the desired binding group component on its surface. It will be understood by ordinary skill that commercially available pigments are sold in various forms such as suspensions, dispersions and the like, and care should be taken to evaluate the commercial form of the pigment and modify it as/if necessary to ensure its compatibility and performance with the optical product components, particularly in the embodiment wherein the pigment surface also functions as the binding group component of the second layer.

Multiple pigments may be utilized in the second layer to achieve a specific hue or shade or color in the final product; however, it will again be understood by ordinary skill that, should multiple pigments be used, they should be carefully selected to ensure their compatibility and performance both with each other and with the optical product components. This is particularly relevant in the embodiment wherein the pigment surface also functions as the binding group component of the second layer, as for example particulate pigments can exhibit different surface charge densities due to different chemical modifications that can impact compatibility.

Preferably the second layer of the composite coating further includes a screening agent. A "screening agent" is defined as an additive that promotes even and reproducible deposition of the second layer via improved dispersion of the electromagnetic energy-absorbing insoluble particle within the second layer by increasing ionic strength and reducing interparticle electrostatic repulsion. Screening agents are generally well known to those of ordinary skill in the art and are described for example in U.S. Published Patent Application number US20140079884 to Krogman et al. Examples of suitable screening agents include any low molecular weight salts such as halide salts, sulfate salts, nitrate salts, phosphate salts, fluorophosphate salts, and the like. Examples of halide salts include chloride salts such as LiCl, NaCl, KCl, CaCl₂, MgCl₂, NH₄Cl and the like, bromide salts such as LiBr, NaBr, KBr, CaBr₂, MgBr₂, and the like, iodide salts such as LiI, NaI, KI, Cal₂, Mgl₂, and the like, and fluoride salts such as, NaF, KF, and the like. Examples of sulfate salts include Li₂SO₄, Na₂SO₄, K₂SO₄, (NH₄)₂SO₄, MgSO₄, COSO₄, CuSO₄, ZnSO₄, SrSO₄, Al₂(SO₄)₃, and Fe₂(SO₄)₃. Organic salts such as (CH₃)₃CCl, (C₂H₅)₃CCl, and the like are also suitable screening agents. Sodium chloride is typically a preferred screening agent based on ingredient cost. The presence and concentration level of a screening agent may allow for higher loadings of the electromagnetic energy-absorbing insoluble particle such as those that may be desired in optical products with a Tᵥᵢₛ of no more than 50% and also may allow for customizable and carefully controllable loadings of the electromagnetic energy-absorbing insoluble particle to achieve customizable and carefully controllable optical product Tᵥᵢₛ levels.

Suitable screening agent concentrations can vary with salt identity and are also described for example in U.S. Published Patent Application number US20140079884 to Krogman et al. In some embodiments, the screening agent concentration can range between 1 mM and 1000 mM or between 10 mM and 100 mM or between 30 mM and 80 mM. In some embodiments the screening agent concentration is greater than 1 mM, 10 mM, 100 mM or 500 mM.

The second layer of the composite coating may also contain other ingredients such as biocides or shelf-life stabilizers.

In some embodiments, the electromagnetic energy-absorbing optical product of the present invention may include a plurality of composite coatings. For example, as depicted in FIG.2, the optical product 10 includes first and second composite coatings 20 and 20', each with a first layer and second layer, i.e. first composite coating 20 including first layer 25 and second layer 30 and second composite coating 20' including first layer 25' and second layer 30'. This depiction is not intended to be limiting in any way on the possible number of composite coatings and one or ordinary skill will appreciate that this depiction is simply exemplary and illustrative of an embodiment with multiple or a plurality of composite coatings. The examples below further illustrate embodiments with a plurality of composite coatings.

For embodiments with a plurality of composite coatings, it will be appreciated that the electromagnetic energy-absorbing insoluble particle for the second layer in each composite coating may be independently selected and that the second layers will in combination provide an additive effect on the electromagnetic energy-absorbing character and effect of the electromagnetic energy-absorbing optical product. For the embodiment shown in FIG 2, this means that the second layer 30 of the first composite coating 20 and the second layer 30' of the second composite coating 20' in combination provide an additive effect on the electromagnetic energy-absorbing character and effect of the electromagnetic energy-absorbing optical product. This additive effect can be customized and carefully controlled in part by the concentration of the electromagnetic energy-absorbing particle in each second layer as dispersed through the presence of the screening agent. For example, in an embodiment wherein the electromagnetic energy-absorbing particle is a pigment, the second layers will in combination provide an additive effect on the visually perceived color of said electromagnetic energy-absorbing optical film product. In this embodiment, the pigments for each second layer may be of same or similar composition and/or color such that the additive effect is to increase intensity or depth or darkness of the visually perceived color of the optical product or, stated another way, to reduce electromagnetic transmittance in the visible wavelength range (or Tᵥᵢₛ). In another embodiment, carbon black is used as the pigment for at least one second layer and pigments such as those listed above are used as pigments for the other second layer(s) such that the additive effect is a visually perceived darkened color, also reducing electromagnetic transmittance in the visible wavelength range (or Tᵥᵢₛ). As discussed above, the present invention may be useful in products wherein relatively high levels of darkening are desired. Accordingly, in a particularly preferred embodiment, the optical products of the present invention have a Tᵥᵢₛ of no more than 50%. In yet another embodiment, the pigments for each second layer may be of complimentary composition and/or color such that the additive effect is a visually perceived color different from and formed by their combination of the individual pigments, for example an additive perceived "green" color achieved by utilizing a blue pigment for one second layer and a yellow pigment for another second layer.

The polymeric substrate 15 may in the broadest sense be any substrate known in the art as useable as an optical product component. A suitable polymeric substrate is typically a flexible polymeric film, more particularly a polyethylene terephthalate (PET) film of a thickness of between 12µ and 375µ (12,000 nm to 375,000 nm) or a polyvinyl butyral (PVB) film, preferably of a thickness of between 0.01 to 1 mm and more preferably a thickness of 15 to 30 mils (approximately 375,000 nm to 760,000 nm). As prior art optical products for window film applications and employing dyes exhibit a variety of drawbacks, the polymeric substrate is most preferably an undyed transparent polyethylene terephthalate film. The polymeric substrate may also be a flexible polyurethane or flexible poly(vinyl chloride) film or may be a flexible multilayer polymeric composite film such as a polyurethane-based multilayer composite film as described for example in U.S. 8,765,263.

The polymeric substrate may further include additives known the art to impart desirable characteristics. A particular example of such an additive is an ultraviolet (UV) absorbing material such as benzotriazoles, hydroxybenzophenones or triazines. A useful polymeric substrate with a UV absorbing additive incorporated therein is described in U.S. Patent No. 6,221,112, originally assigned to a predecessor assignee of the present invention.

In one embodiment wherein the polymeric substrate is a flexible polymeric film such as PET, the optical product may be a window film. As well known in the art, conventional window films are designed and manufactured with levels of electromagnetic energy transmittance or reflectivity that are selected based on a variety of factors such as for example product end use market application and the like. In one embodiment, the optical product of the present invention has visible light transmittance or Tᵥᵢₛ of no more than 50%, preferably no more than 45% and more preferably no more than 40%. Such levels of visible light transmittance are often desired in window films with high levels of darkening for certain automotive end use applications such as sidelights. In another embodiment, the optical product of the present invention has visible light transmittance or Tᵥᵢₛ of from 80 to 85%. Such levels of visible light transmittance are often desired in window films with relatively moderate to low levels of darkening (typically also with infrared absorption) for (to the extent permitted by governmental regulation) certain automotive end use applications such as windscreens. In yet another embodiment, the optical product of the present invention has visible light transmittance or Tᵥᵢₛ of no less than 85%, preferably no less than 88% and more preferably no less than 90%. Such levels of visible light transmittance are often desired in window films with low to minimal levels of darkening for certain architectural end use applications.

The window films may optionally include layers or coatings known to those of ordinary skill in the window film art. Coatings for example may include protective hardcoats, scratch-resist or "SR" coats, adhesive layers, protective release liners and the like. Layers may include for example metallic layers applied by sputtering or other known techniques. Such layers or coatings may be components of the polymeric substrate. Further, the polymeric substrate may be a laminated or multilayer structure.

In one embodiment, the optical product is an interlayer for laminated glass. In this embodiment, the polymeric substrate is formed from film-forming materials known in the art for this purpose, including for example plasticized polyvinyl butyral (PVB), polyurethanes, polyvinyl chloride, polyvinylacetal, polyethylene, ethyl vinyl acetates and the like. A preferred film-forming material for the interlayer is a plasticized PVB such as that used in a commercially available from Eastman Chemical Company as SAFLEX® PVB interlayer. In this embodiment, the composite coating may be formed on at least one surface of the polymeric substrate.

In an embodiment wherein the polymeric substrate is a flexible polymeric film such as PET, the optical product may be a composite interlayer for laminated glass including at least one safety film or interlayer. The safety film may be formed from film-forming materials known in the art for this purpose, including for example plasticized polyvinyl butyral (PVB), polyurethanes, polyvinyl chloride, polyvinylacetal, polyethylene, ethyl vinyl acetates and the like. Preferred safety film is a plasticized PVB film or interlayer commercially available from Eastman Chemical Company as SAFLEX® PVB interlayer. Preferably, the composite interlayer includes two safety films or one film layer and one coating layer, such as a PVB coating that encapsulate the polymeric substrate. Composite interlayers of this general type are known in the art and are described for example in U.S. Patent Nos. 4,973,511 and 5,091,258.

In another embodiment, the optical product of the present invention is a composite for coloring an opaque article by application thereto. Such composites are known in the art and are sometimes referred to in the art as a colorant composite, paint composite or car wrap. More particularly, the article may be a vehicle selected from the group consisting of an automobile, aircraft or boat; a vehicle panel or part such as a bumper, hood, fender or door; and a portion thereof. In this embodiment, the composite is applied to or adhered to the article using techniques described in the above-referenced '263 patent or in U.S. Patent No. 5,030,513. One of ordinary skill will appreciate that the term "coloring" means for example imparting a color, multiple colors or an aesthetic color-based design or pattern to the opaque article.

In another aspect, a method for forming an electromagnetic energy-absorbing optical product is disclosed. The method includes (a) applying a first coating composition to a polymeric substrate to form a first layer and (b) applying a second coating composition atop said first layer to form a second layer, said first layer and said second layer together constituting a composite coating. The first coating composition includes a polyionic binder and the second coating composition includes at least one electromagnetic energy-absorbing insoluble particle and each of said first and second coating compositions include a binding group component which together form a complimentary binding group pair. The second coating composition preferably includes a screening agent as defined above.

In a preferred embodiment, at least one of the first and second coating compositions are an aqueous dispersion or solution and most preferably both of the first and second coating compositions are an aqueous dispersion or solution. In this embodiment, both applying steps (a) and (b) are performed at ambient temperature and pressure.

The optical products of the present disclosure are preferably manufactured using known "layer-by-layer" (LbL) processes such as described in Langmuir, 2007, 23, 3137-3141 or in U.S. Patent Nos. 8,234,998 and 8,689,726 and U.S, Published Application US 20140079884, co-invented by co-inventor Krogman of the present application.

The following examples, while provided to illustrate with specificity and detail the many aspects and advantages of the present invention, are not be interpreted as in any way limiting its scope.

### Example 1

To produce a coating composition suitable for forming the second layer of the composite coating used in the present invention, 66.67g of Cab-O-Jet 352K, a dispersion of electromagnetic energy-absorbing insoluble particle, a colloidally stable carbon black pigment commercially available from Cabot Corp., was diluted in deionized water to 1 wt% carbon black. As the surface of the carbon black particles are chemically functionalized with carboxylate groups by the manufacturer (thereby providing the binding group component), the pH of the solution is adjusted to 9 with sodium hydroxide to ensure the carboxylate groups are fully deprotonated. 2.92 g of sodium chloride are then added to the solution (50 mM) to screen the electrostatic repulsion of the particles in suspension and prepare them for deposition, where 50 mMNaCI has been determined to electrostatically screen the surface charge of the carbon black particles without causing them to aggregate and precipitate from solution.

### Example 2

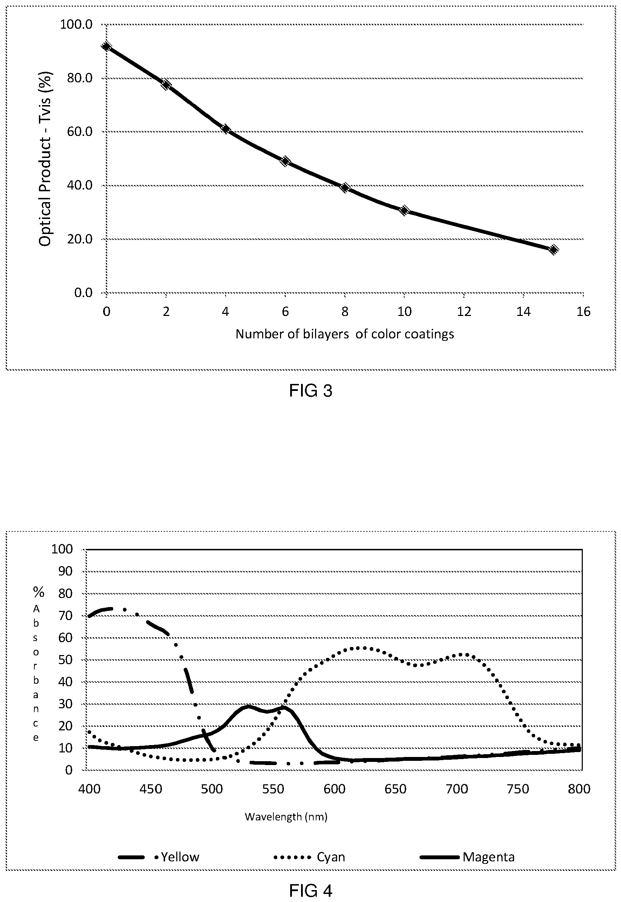

To form the optical product used in the present invention, a sheet of polyethylene terephthalate (PET) film (as substrate) with a thickness of 75 microns was pretreated as known in the art by passing through a conventional corona treatment. A first layer was then formed on the PET sheet by spray coating, at ambient pressure and temperature, a first coating composition of 20 mM solution, based on the molecular weight of the charged repeat unit, of polyallylamine hydrochloride with an adjusted pH of 10. Excess non-absorbed material was rinsed away with a deionized water spray. The composition prepared in Example 1 above for use in forming the second layer was then sprayed onto the surface of the first layer with excess material again rinsed away in a similar fashion with the first layer and electromagnetic energy-absorbing particle-containing second layer constituting the composite color coating of the present invention .Additional composite coatings were applied to the existing substrate using the same procedure with the visible electromagnetic transmittance (Tᵥᵢₛ) of the electromagnetic energy-absorbing optical product measured using a BYK HazeGard Pro after application of 2,4,6,8,10 and 15 composite color coatings. The results of the Tᵥᵢₛ measurements are graphically depicted in Figure 3.

### Example 3

To produce compositions suitable for forming the second layer of the composite coatings used in the present invention, 100 g samples of a dispersion of colloidally stable color pigment, for example Cabot Cab-O-Jet 250C cyan, 265M magenta, or 270Y yellow, were each diluted in deionized water to 1 wt% pigment to form five separate coating compositions. As the surface of the pigment particles are chemically functionalized with sulfonate groups by the manufacturer (thereby providing the binding group component), the pH of the solution is adjusted to 9 with sodium hydroxide to ensure the carboxylate groups are fully deprotonated. 2.92 g of sodium chloride are then added to the solution (50 mM) to screen the electrostatic repulsion of the particles in suspension and prepare them for deposition, where 50 mM NaCI has been determined to electrostatically screen the surface charge of the carbon black particles without causing them to aggregate and precipitate from solution.

### Example 4

To form electromagnetic energy-absorbing optical products used in the present invention, three sheets of polyethylene terephthalate (PET) film (as substrate) with a thickness of 75,000 nm (75 microns) were pretreated as known in the art by passing them through a conventional corona treatment. A first layer was then formed on each PET sheet by spray coating a 20 mM solution, based on the molecular weight of the charged repeat unit, of polyallylamine hydrochloride with an adjusted solution pH of 10. Excess first layer material was rinsed away with a deionized water spray. The coating compositions prepared in Example 3 above were then each sprayed onto the surface of a separate coated sheet with excess material again rinsed away in a similar fashion. The first layer and the second layer together constitute the composite coating of the present invention. In this example, three separate electromagnetic energy-absorbing optical product samples, each using one of the coating compositions created in Example 3, were created by repeating the above deposition process for each substrate 5 times, thereby depositing 5 composite coatings on each substrate. The electromagnetic absorbance for each sample at various wavelengths was then measured using a UV/vis spectrometer and is plotted against those wavelengths graphically in Figure 4.

### Example 5

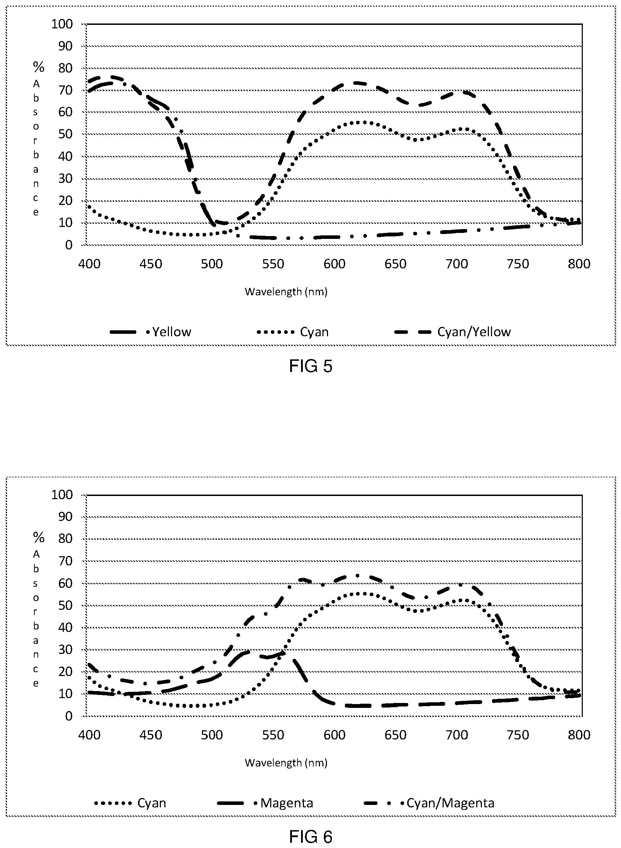

To demonstrate the use of multiple electromagnetic energy-absorbing insoluble particles in a single second coating composition and accordingly a second layer, a green second coating composition was produced by forming a 50/50 mixture of the cyan- and yellow-pigment compositions prepared in Example 3. The procedure of Example 2 was then utilized to form an electromagnetic energy-absorbing optical product with the first layer of Example 2 and a second layer formed from the green composition described above. The deposition process was repeated for the substrate 5 times, thereby depositing 5 composite coatings on the substrate. The electromagnetic absorbance at various wavelengths for the sample was then measured using a UV-vis spectrometer and is plotted graphically against those wavelengths along with the plots for the Example 4 samples with cyan and yellow pigment in Figure 5.

### Example 6

To demonstrate the use of multiple electromagnetic energy-absorbing insoluble particles in a single second coating composition and accordingly a second layer, a blue composition was produced by forming a 50/50 mixture of the cyan- and magenta-compositions prepared in Example 3. The procedure of Example 2 was then utilized to form an electromagnetic energy-absorbing optical product with the first layer of Example 2 and a second layer formed from the blue second coating composition described above. The deposition process was repeated for the substrate 5times, thereby depositing 5composite coatings on the substrate. The electromagnetic absorbance at various wavelengths for the sample was then measured using a UV-vis spectrometer and is plotted graphically along with the plots for the Example 4 samples with cyan and magenta pigments in Figure 6.

### Example 7

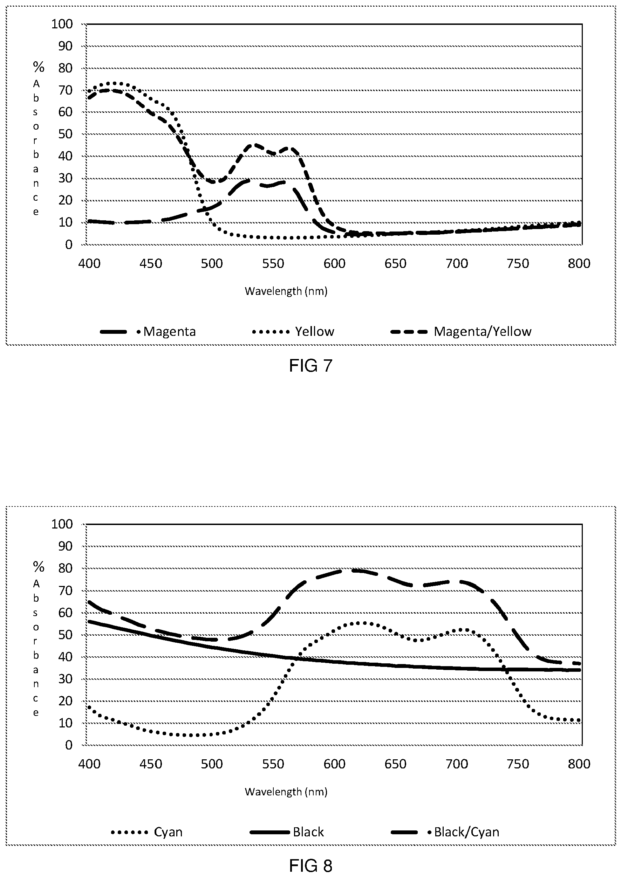

To further demonstrate the use of multiple electromagnetic energy-absorbing insoluble particles in a single second coating composition and accordingly a second layer, a red composition was produced by forming a 50/50 mixture of the yellow and magenta- compositions prepared in Example 3. The procedure of Example 2 was then utilized to form a colored optical product with the first layer of Example 2 and a second layer formed from the red composition described above. The deposition process was repeated for the substrate 5times, thereby depositing 5composite colorant coatings on the substrate. The electromagnetic absorbance for the sample at various wavelengths was then measured using UV/vis spectrometer and is plotted against those wavelengths along with the plots for the Example 4 samples with magenta and yellow pigments in Figure 7.

### Example 8

A film of reduced visible transmission and tunable color can be created by depositing the desired number of composite coatings with carbon black as the -absorbing insoluble particle (Example 2) followed by the desired number of composite coatings with cyan, magenta and yellow pigments or a combination thereof (Examples 4-7). Here the deposition process was repeated for the substrate 5 times where the second layer contains carbon black followed by 5 times where the second layer contains cyan pigment, thereby depositing a total of 10 composite coatings on the substrate. The electromagnetic absorbance for the sample at various wavelengths was then measured using UV/vis spectrometer and is plotted against those wavelengths along with the plots for a black pigment-containing sample with five composite coatings generated in the manner of Example 2 and a cyan pigment-containing sample with five composite coatings generated in the manner of Example 4 in Figure 8.

### Example 9

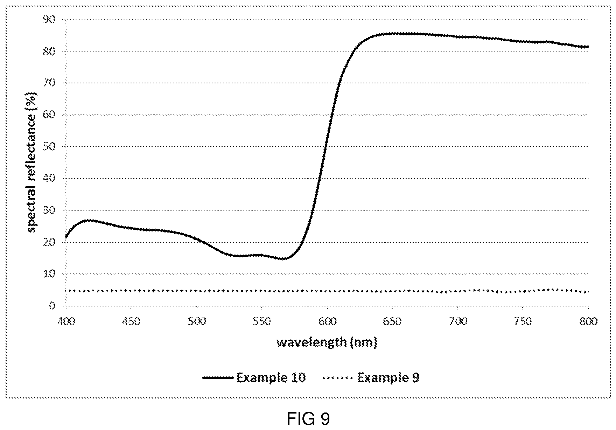

To form an electromagnetic energy-absorbing optical product used in the present invention wherein the electromagnetic energy-absorbing optical product is a composite for coloring an opaque article, a sheet of thermoplastic polyurethane (TPU) film (as polymeric substrate) with a thickness of 38,000 nm (38 microns) was pretreated as known in the art by passing through a conventional corona treatment. A first layer was then formed on the TPU sheet by spray coating, at ambient pressure and temperature, a first coating composition of 20 mM solution, based on the molecular weight of the charged repeat unit, of polyallylamine hydrochloride with an adjusted pH of 10. Excess non-absorbed material was rinsed away with a deionized water spray. The composition prepared in Example 1 above for use in forming the second layer was then sprayed onto the surface of the first layer with excess material again rinsed away in a similar fashion with the first layer and electromagnetic energy-absorbing particle-containing second layer constituting the composite color coating of the present invention. 24 additional composite coatings with the same first and second layers were applied to the existing substrate using the same procedure. A polymeric top coat and a mounting adhesive were then applied and the electromagnetic energy-absorbing optical product was mounted on a metal panel for visible electromagnetic reflectance (Rᵥᵢₛ) measurement using a HunterLab® Pro spectrophotometer. The results of the Rᵥᵢₛ measurements for the electromagnetic energy-absorbing optical product are graphically depicted in Figure 9.

### Example 10

The procedure of Example 9 was used to form an electromagnetic energy-absorbing optical product, in the form of a composite for coloring an opaque article, using a pigment dispersion similar to that described in Example 3. More specifically, a composite for coloring an opaque article with a red color was created using a first coating composition of 20 mM solution, based on the molecular weight of the charged repeat unit, of polyallylamine hydrochloride with an adjusted pH of 10 to the first coating layer and Cabot Cab-O-Jet 1025R red pigment for use in forming the second coating composition for the second layer. Each layer was sprayed, and excess material rinsed away, in the manner described in Example 9. The polymeric substrate to which the composite coating was applied was a sheet of thermoplastic polyurethane (TPU) film with a thickness of 38,000 nm (38 microns) which had been pretreated as known in the art by passing through a conventional corona treatment. 24 additional composite coatings were applied with the same first and second layers using the same procedure. A polymeric top coat and a mounting adhesive were then applied and the electromagnetic energy-absorbing optical product was mounted on a metal panel for visible electromagnetic reflectance (Rᵥᵢₛ) measurement using a HunterLab® Pro spectrophotometer. The results of the Rᵥᵢₛ measurements for the electromagnetic energy-absorbing optical product are graphically depicted in Figure 9.

### Example 11

To form an optical product used in the present invention wherein the optical product is an interlayer for laminated glass, a plasticized PVB sheet commercially available from Eastman Chemical Company as Saflex® SG 40 was selected as the polymeric substrate. A first layer was then formed on the PVB sheet by spray coating, at ambient pressure and temperature, a first coating composition of 20 mM solution, based on the molecular weight of the charged repeat unit, of polyallylamine hydrochloride with an adjusted pH of 10. Excess non-absorbed material was rinsed away with a deionized water spray. The composition prepared in Example 1 above for use in forming the second layer was then sprayed onto the surface of the first layer with excess material again rinsed away in a similar fashion with the first layer and electromagnetic energy-absorbing particle-containing second layer constituting the composite color coating of the present invention. 24 additional composite coatings with the same first and second layers were applied to the existing substrate using the same procedure. Utility of the resulting electromagnetic energy-absorbing optical product as an interlayer for laminated glass was then demonstrated by forming using conventional and well-known glass laminating methods and equipment a laminated glass product of two sheets of 2.8 mm (1/8-inch)-thick glass with the electromagnetic energy-absorbing optical product there-between. The laminated glass product was visually inspected to confirm coating integrity and laminate quality, including the absence of interlayer flow.

A person skilled in the art will recognize that the measurements described herein are measurements based on publicly available standards and guidelines that can be obtained by a variety of different specific test methods. The test methods described represents only one available method to obtain each of the required measurements.

## Claims

1. Use of an electromagnetic energy-absorbing optical product, wherein said optical product is a composite, comprising:
a) a polymeric substrate and
b) a composite coating, said composite coating comprising a first layer comprising a polyionic binder and a second layer comprising an electromagnetic energy-absorbing insoluble particle, wherein each of said first layer and said second layer include a binding group component which together form a complimentary binding group pair; wherein said electromagnetic energy-absorbing insoluble particle is a pigment, and wherein the term "insoluble" means that the particle does not substantially dissolve in the composition used to form the second layer and exists as a particle in the optical product structure;
for coloring an opaque article by application thereto, wherein the opaque article is a vehicle; a vehicle panel, a vehicle part and a portion thereof.

2. Method for coloring an opaque article, comprising:
applying an electromagnetic energy-absorbing optical product to said opaque article;
wherein said electromagnetic energy-absorbing optical product comprises:
a) a polymeric substrate and
b) a composite coating, said composite coating comprising a first layer comprising a polyionic binder and a second layer comprising an electromagnetic energy-absorbing insoluble particle, wherein each of said first layer and said second layer include a binding group component which together form a complimentary binding group pair; wherein said electromagnetic energy-absorbing insoluble particle is a pigment, and wherein the term "insoluble" means that the particle does not substantially dissolve in the composition used to form the second layer and exists as a particle in the optical product structure;
wherein said optical product is a composite, and
wherein the opaque article is vehicle; a vehicle panel, a vehicle part and a portion thereof.

3. Use of claim 1 or method of claim 2 wherein said composite coating has a total thickness of 5 nm to 300 nm.

4. Use of claim 1 or method of claim 2 wherein said first layer is immediately adjacent to said polymeric substrate at its first face and said second layer is immediately adjacent to said first layer at its opposite face.

5. Use of claim 1 or method of claim 2 wherein the surface of said pigment includes said binding group component of said second layer.

6. Use of claim 1 or method of claim 2 further comprising a second composite coating, said second composite coating comprises a first layer comprising a polyionic binder and a second layer comprising an electromagnetic energy-absorbing particle, wherein said first layer of said second composite coating and said second layer of said second composite coating, comprise a complimentary binding group pair.

7. Use of claim 1 or method of claim 2 wherein said vehicle is an automobile, aircraft or boat.

8. Use of claim 1 or method of claim 2 wherein at least one of said first layer and said second layer of said composite coating is formed from an aqueous solution.

9. Use of claim 1 or method of claim 2, wherein said electromagnetic energy-absorbing optical product comprises:
a) a polymeric substrate selected from the group consisting of a polyvinyl butyral film, a flexible polyurethane film, a flexible poly(vinyl chloride) film and a flexible multilayer polymeric composite film.

10. Use or method of claim 9 wherein said optical product has a visible light transmittance Tvis of no more than 50%; or
of no less than 80%.

11. Use or method of claim 10 wherein said optical product has a visible light transmittance Tvis of no less than 80% and
said polymeric substrate is a flexible multilayer polymeric composite film; or
use or method of claim 10 wherein said optical product has a visible light transmittance Tvis of no less than 80% and
said flexible multilayer polymeric composite film is a polyurethane-based flexible multilayer composite film; or
use or method of claim 10 wherein said optical product has a visible light transmittance Tvis of no less than 80% and
said polymeric substrate is a polyvinyl butyral film.

## Patentansprüche

1. Verwendung eines elektromagnetische Energie absorbierenden optischen Produkts, wobei das optische Produkt ein Komposit ist, umfassend:
a) ein polymeres Substrat, und
b) eine Kompositbeschichtung, wobei die Kompositbeschichtung eine erste Schicht, die ein polyionisches Bindemittel umfasst, und eine zweite Schicht, die ein elektromagnetische Energie absorbierendes unlösliches Teilchen umfasst, umfasst, wobei sowohl die erste Schicht als auch die zweite Schicht eine Bindungsgruppenkomponente enthalten, die gemeinsam ein komplementäres Bindungsgruppenpaar bilden; wobei das elektromagnetische Energie absorbierende unlösliche Teilchen ein Pigment ist, und wobei der Begriff "unlöslich" bedeutet, dass sich das Teilchen im Wesentlichen nicht in der Zusammensetzung, die zur Bildung der zweiten Schicht verwendet wird, auflöst und als Teilchen in der Struktur des optischen Produkts vorliegt;
zum Färben eines undurchsichtigen Gegenstandes durch Auftragen darauf, wobei der undurchsichtige Gegenstand ein Fahrzeug, eine Fahrzeugkonsole, ein Fahrzeugteil oder ein Teil davon ist.

2. Verfahren zum Färben eines undurchsichtigen Gegenstandes, umfassend:
Aufbringen eines elektromagnetische Energie absorbierenden optischen Produkts auf den undurchsichtigen Gegenstand;
wobei das elektromagnetische energieabsorbierende optische Produkt umfasst:
a) ein polymeres Substrat, und
b) eine Kompositbeschichtung, wobei die Kompositbeschichtung eine erste Schicht aufweist, die ein polyionisches Bindemittel umfasst, und eine zweite Schicht aufweist, die ein elektromagnetische Energie absorbierendes unlösliches Teilchen umfasst, wobei sowohl die erste Schicht als auch die zweite Schicht eine Bindungsgruppenkomponente enthalten, die gemeinsam ein komplementäres Bindungsgruppenpaar bilden; wobei das elektromagnetische Energie absorbierende unlösliche Teilchen ein Pigment ist, und wobei der Begriff "unlöslich" bedeutet, dass sich das Teilchen in der Zusammensetzung, die zur Bildung der zweiten Schicht verwendet wird, im Wesentlichen nicht auflöst und als Teilchen in der Struktur des optischen Produkts vorliegt;
wobei das optische Produkt ein Komposit ist, und
wobei das undurchsichtige Produkt ein Fahrzeug, eine Fahrzeugkonsole, ein Fahrzeugteil oder ein Teil davon ist.

3. Verwendung nach Anspruch 1 oder Verfahren nach Anspruch 2, wobei die Kompositbeschichtung eine Gesamtdicke von 5 nm bis 300 nm aufweist.

4. Verwendung nach Anspruch 1 oder Verfahren nach Anspruch 2, wobei die erste Schicht mit ihrer ersten Fläche unmittelbar an das Polymersubstrat angrenzt und die zweite Schicht mit ihrer gegenüberliegenden Fläche unmittelbar an die erste Schicht angrenzt.

5. Verwendung nach Anspruch 1 oder Verfahren nach Anspruch 2, wobei die Oberfläche des Pigments die Bindungsgruppenkomponente der zweiten Schicht enthält.

6. Verwendung nach Anspruch 1 oder Verfahren nach Anspruch 2, ferner umfassend eine zweite Kompositbeschichtung, wobei die zweite Kompositbeschichtung eine erste Schicht aufweist, die ein polyionisches Bindemittel umfasst, und eine zweite Schicht aufweist, die ein elektromagnetische Energie absorbierendes Teilchen umfasst, wobei die erste Schicht der zweiten Kompositbeschichtung und die zweite Schicht der zweiten Kompositbeschichtung ein komplementäres Bindungsgruppenpaar umfassen.

7. Verwendung nach Anspruch 1 oder Verfahren nach Anspruch 2, wobei das Fahrzeug ein Automobil, ein Flugzeug oder ein Boot ist.

8. Verwendung nach Anspruch 1 oder Verfahren nach Anspruch 2, wobei zumindest eine der ersten Schicht und der zweiten Schicht der Kompositbeschichtung aus einer wässrigen Lösung gebildet ist.

9. Verwendung nach Anspruch 1 oder Verfahren nach Anspruch 2, wobei das elektromagnetische Energie absorbierende optische Produkt umfasst:
a) ein Polymersubstrat, ausgewählt aus der Gruppe bestehend aus einem Polyvinylbutyralfilm, einem flexiblen Polyurethanfilm, einem flexiblen Poly(vinylchlorid)film und einem flexiblen mehrschichtigen Polymerkompositfilm.

10. Verwendung oder Verfahren nach Anspruch 9, wobei das optische Produkt eine Durchlässigkeit Tvis für sichtbares Licht von nicht mehr als 50%; oder
von nicht weniger als 80% aufweist.

11. Verwendung oder Verfahren nach Anspruch 10, wobei das optische Produkt eine Durchlässigkeit Tvis für sichtbares Licht von nicht weniger als 80 % aufweist, und das polymere Substrat ein flexibler mehrschichtiger polymerer Kompositfilm ist; oder
Verwendung oder Verfahren nach Anspruch 10, wobei das optische Produkt eine Durchlässigkeit Tvis für sichtbares Licht von nicht weniger als 80 % aufweist, und der flexible mehrschichtige Polymerkompositfilm ein flexibler mehrschichtiger Kompositfilm auf Polyurethanbasis ist; oder
Verwendung oder Verfahren nach Anspruch 10, wobei das optische Produkt eine Durchlässigkeit Tvis für sichtbares Licht von nicht weniger als 80 % aufweist, und das polymere Substrat ein Polyvinylbutyralfilm ist.

## Revendications

1. Utilisation d'un produit optique absorbant l'énergie électromagnétique, dans laquelle ledit produit optique est un composite, comprenant :
a) un substrat polymère et
b) un revêtement composite, ledit revêtement composite comprenant une première couche comprenant un liant polyionique et une deuxième couche comprenant une particule insoluble absorbant l'énergie électromagnétique, dans laquelle chacune de ladite première couche et de ladite deuxième couche comprend un constituant de groupe de liaison qui forment ensemble une paire de groupes de liaison complémentaires ; dans laquelle ladite particule insoluble absorbant l'énergie électromagnétique est un pigment, et dans laquelle le terme «insoluble» signifie que la particule ne se dissout pas sensiblement dans la composition utilisée pour former la deuxième couche et existe sous la forme d'une particule dans la structure du produit optique ;
pour colorer un article opaque par application à celui-ci, dans laquelle l'article opaque est un véhicule ; un panneau de véhicule, une pièce de véhicule et une partie de celui-ci.

2. Procédé pour colorer un article opaque, comprenant :
l'application d'un produit optique absorbant l'énergie électromagnétique audit article opaque ;
dans lequel ledit produit optique absorbant l'énergie électromagnétique comprend :
a) un substrat polymère et
b) un revêtement composite, ledit revêtement composite comprenant une première couche comprenant un liant polyionique et une deuxième couche comprenant une particule insoluble absorbant l'énergie électromagnétique, dans lequel chacune de ladite première couche et de ladite deuxième couche comprend un constituant de groupe de liaison qui forment ensemble une paire de groupes de liaison complémentaires ; dans lequel ladite particule insoluble absorbant l'énergie électromagnétique est un pigment, et dans lequel le terme «insoluble» signifie que la particule ne se dissout pas sensiblement dans la composition utilisée pour former la deuxième couche et existe sous la forme d'une particule dans la structure du produit optique ;
dans lequel ledit produit optique est un composite, et
dans lequel l'article opaque est un véhicule ; un panneau de véhicule, une pièce de véhicule et une partie de celui-ci.

3. Utilisation selon la revendication 1 ou procédé selon la revendication 2 dans lequel ledit revêtement composite a une épaisseur totale de 5 nm à 300 nm.

4. Utilisation selon la revendication 1 ou procédé selon la revendication 2 dans lequel ladite première couche est immédiatement adjacente audit substrat polymère au niveau de sa première face et ladite deuxième couche est immédiatement adjacente à ladite première couche au niveau de sa face opposée.

5. Utilisation selon la revendication 1 ou procédé selon la revendication 2 dans lequel la surface dudit pigment comprend ledit constituant de groupe de liaison de ladite deuxième couche.

6. Utilisation selon la revendication 1 ou procédé selon la revendication 2 comprenant en outre un deuxième revêtement composite, ledit deuxième revêtement composite comprend une première couche comprenant un liant polyionique et une deuxième couche comprenant une particule absorbant l'énergie électromagnétique, dans lequel ladite première couche dudit deuxième revêtement composite et ladite deuxième couche dudit deuxième revêtement composite comprennent une paire de groupes de liaison complémentaires.

7. Utilisation selon la revendication 1 ou procédé selon la revendication 2 dans lequel ledit véhicule est une automobile, un aéronef ou un bateau.

8. Utilisation selon la revendication 1 ou procédé selon la revendication 2 dans lequel au moins l'une de ladite première couche et de ladite deuxième couche dudit revêtement composite est formée à partir d'une solution aqueuse.

9. Utilisation selon la revendication 1 ou procédé selon la revendication 2 dans lequel ledit produit optique absorbant l'énergie électromagnétique comprend :
a) un substrat polymère choisi dans le groupe constitué d'un film de poly(butyral de vinyle), d'un film de polyuréthane flexible, d'un film de poly(chlorure de vinyle) flexible et d'un film composite polymère multicouche flexible.

10. Utilisation ou procédé selon la revendication 9 dans lequel ledit produit optique présente une transmittance de lumière visible Tvis inférieure ou égale à 50 % ; ou supérieure ou égale à 80 %.

11. Utilisation ou procédé selon la revendication 10 dans lequel ledit produit optique présente une transmittance de lumière visible Tvis supérieure ou égale à 80 % et ledit substrat polymère est un film composite polymère multicouche flexible ; ou
utilisation ou procédé selon la revendication 10 dans lequel ledit produit optique présente une transmittance de lumière visible Tvis supérieure ou égale à 80 % et ledit film composite polymère multicouche flexible est un film composite multicouche flexible à base de polyuréthane ; ou
utilisation ou procédé selon la revendication 10 dans lequel ledit produit optique présente une transmittance de lumière visible Tvis supérieure ou égale à 80 % et ledit substrat polymère est un film de poly(butyral de vinyle).
